# EUROPEAN PATENT APPLICATION

(11) **EP 2 800 008 A1**
(43) Date of publication of application: **05.11.2014**
(21) Application number: 12861084.7
(22) Date of filing: 08.05.2012
(51) Int. Cl.: G06F 15/167

(54) **METHOD AND SYSTEM FOR MULTIPROCESSORS TO SHARE MEMORY**

(30) Priority: 29.12.2011 CN 201110453819
(71) Applicant: Zhongxing Microelectronics Technology Co., Ltd., Shenzhen, Guangdong 518085 (CN)
(72) Inventor: YUAN, Cissy, Shenzhen, Guangdong 518057 (CN); QIU, Fang, Shenzhen Guangdong 518057 (CN); TIAN, Xuehong, Shenzhen Guangdong 518057 (CN); TIAN, Wanting, Shenzhen Guangdong 518057 (CN); ZENG, Daibing, Shenzhen Guangdong 518057 (CN); ZHU, Zhigang, Shenzhen Guangdong 518057 (CN)
(74) Representative: Brevalex
(86) International application number: PCT/CN2012/075201
(87) International publication number: WO 2013/097394

(57) **Abstract**

A method and system for multiple processors to share memory are disclosed. The method includes that: at least one local interconnection network is set, each of which is connected with at least two function modules; a local shared memory unit connected with the local interconnection network is set, and address space of each function module is mapped to the local shared memory unit; a first function module of the at least two function modules writes processed initial data into the local shared memory unit through the local interconnection network; and a second function module of the at least two function modules acquires data from the local shared memory unit via the local interconnection network. The technical solution of the disclosure can solve the drawbacks that a conventional system for multiple processors to globally share memory suffers a large transmission delay, high management overhead and the like.

## Description

### TECHNICAL FIELD

The disclosure relates to the field of computer systems, and more particularly to a method and system for multiple processors to share memory.

### BACKGROUND

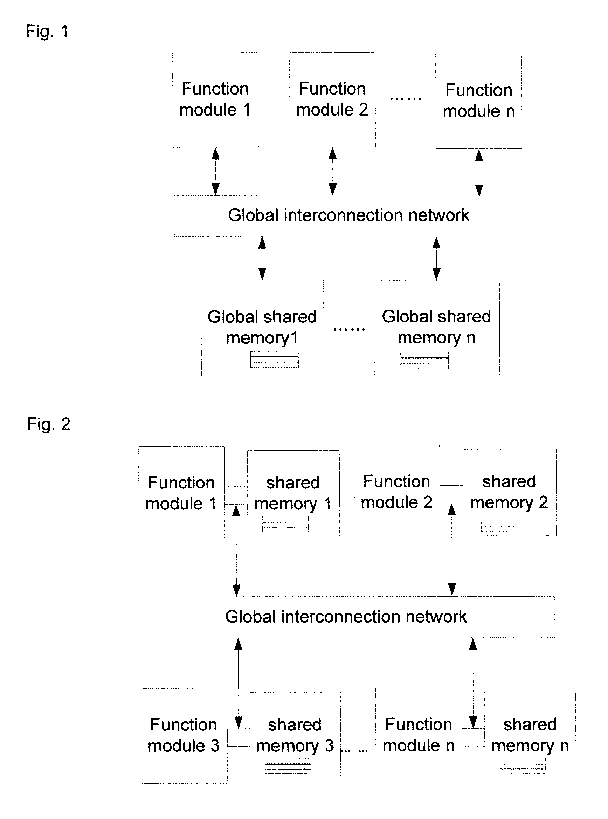

Conventional systems for multiple processors to globally share memory are shown as in Fig. 1 and Fig. 2. Function modules include but are not limited to processor modules including a general processor module and a configurable processor module. A global interconnection network includes but is not limited to various topological connection networks including a shared bus, a crossbar switch and Mesh/Torus. The shared memory may adopt a physical concentrated organizational form or a distributed organizational form. Here, the function module may include local backup (i.e., cache) of a shared memory. The shared memory in Fig. 2 may be also integrated in the function module as a Tightly-Coupled Memory (TCM).

In the conventional system for multiple processors to globally share memory, data exchanged between function modules is implemented by the shared memory or message passing. In a system for multiprocessor to globally share memory, which includes a cache, maintenance of consistency between caches of function modules will cause great hardware overhead. During each memory access, each function module has to check state information of memory content of the same address possibly included in other function modules, and multiple function modules need to be connected with a shared memory through a global interconnected network. With the increase of function modules, processing processes including scalability, deadlock and livelock of the global interconnection network greatly complicate the design of the global interconnection network, which will further cause a serious performance problem, the problem of power consumption and other problems. In addition, the functional modules may need to access a shared memory simultaneously, and limited bandwidths will be confronted with extra conflict and arbitration overhead, which will also delay access to the shared memory.

In existing technologies, there is a mechanism for exchanging data between local private memories and global shared memories of different processors through changing software mapping. In this solution, all data transmission still needs to be completed by a global interconnection network. In addition, there is a multiprocessor system with a local private memory. Some processors inhibit a program from being executed in the space of a global shared memory. In this solution, data exchange among processors still needs to be completed by the global shared memory. Furthermore, there is also a technical solution to implement data exchange by dividing the address space of a heterogeneous multi-core processor into two parts, i.e., global shared space and private space and by storing all shared space on a chip. Processors except for a main processor need to access shared space through arbitration judgment. In this solution, each processor corresponds to one private space, thus increasing nodes in a system to further increase the management overhead of the system. In addition, the shared space stored on the chip is relatively smaller.

### SUMMARY

In view of this, the disclosure provides a method and system for multiple processors to share memory, so as to solve the drawbacks that the conventional system for multiple processors to globally share memory suffers a large transmission delay, high management overhead and the like.

To this, a technical solution of the disclosure is implemented as follows.

The disclosure provides a method for multiple processors to share memory. The method includes that: at least one local interconnection network is set, each of which is connected with at least two function modules; a local shared memory unit connected with the local interconnection network is set, and address space of each function module is mapped to the local shared memory unit; and the method further includes:
a first function module of the at least two function modules writes processed initial data into the local shared memory unit through the local interconnection network; and
a second function module of the at least two function modules acquires data from the local shared memory unit via the local interconnection network.

In the method, when there are multiple local interconnection networks, the method may further include that: at least one function module of the at least two function modules is connected with at least two local interconnection networks.

In the method, the method may further include that: the second function module processes the acquired data, and writes, through another local interconnection network connected with the second function module, the processed data into a local shared memory unit connected with the another local interconnection network.

In the method, when there are multiple local interconnection networks, the method may further include that: when there is no common function module between the local interconnection networks, at least one function module in the at least two function modules connected with each local interconnection network is connected with a global interconnection network.

In the method, the step that the address space of each function module is mapped to the local shared memory unit may include that:
whole address space of each function module are mapped to the local shared memory unit; or
the address space of each function module is divided into multiple areas and the address space consisting of multiple areas is mapped to the local shared memory unit and a global shared memory unit respectively; or
when there are multiple local interconnection networks and local shared memory units, the address space of each function module is divided into multiple areas, and the address space consisting of multiple areas is mapped to different local shared memory units respectively.

In the method, the step that the address space of each function module is divided into multiple areas may include that: the address space of each function module is divided into multiple areas by configuring a memory management unit or adding a hardware memory unit.

In the method, the step that a first function module of the at least two function modules writes processed initial data into the local shared memory unit through the local interconnection network may include that:
the first function module of the at least two function modules acquires initial data from an external interface of a chip or a global shared memory unit processes the initial data, and writes, through a local interconnection network connected with with the first function module, the processed initial data into the local shared memory unit connected with the local interconnection network.

The disclosure further provides a system for multiple processors to share memory. The system includes at least one subsystem for multiple processors to share memory, and the subsystem for multiple processors to share memory includes a local interconnection network, at least two function modules connected with the local interconnection network and a local shared memory unit connected with the local interconnection network, wherein
a first function module of the at least two function modules is configured to map address space of the first function module of the at least two function modules to the local shared memory unit, and is further configured to write processed initial data into the local shared memory unit through the local interconnection network; and
a second function module of the at least two function modules is configured to map the address space of the second function module of the at least two function modules to the local shared memory unit, and is further configured to acquire data from the local shared memory unit via the local interconnection network.

In the system, when the system includes multiple subsystems for multiple processors to share memory, at least one function module of the at least two function modules may be connected with at least two local interconnection networks.

In the system, the second function module may be further configured to process the obtained data, and write, through another local interconnection network connected with the second function module, the processed data into a local shared memory unit connected with the another local interconnection network.

In the system, when the system includes multiple subsystems for multiple processors to share memory and there is no common function module between the local interconnection networks in the multiple subsystems for multiple processors to share memory, the system may further include a global interconnection network, wherein at least one function module in the at least two function modules connected with each local interconnection network may be connected with the global interconnection network.

In the system, each function module may be configured to:
map whole address space of each function module to the local shared memory unit; or
divide the address space of each function module into multiple areas, and map the address space consisting of the multiple areas to the local shared memory unit and a global shared memory unit respectively; or
when there are multiple local interconnection networks and local shared memory units, divide the address space of each function module into multiple areas, and map the address space consisting of multiple areas to different local shared memory units respectively.

In the method and system for multiple processors to share memory provided by the disclosure, at least one local interconnection network is set, each of which is connected with at least two function modules, a local shared memory unit connected with the local interconnection network is set, and the address space of each function module is mapped to the local shared memory unit; a first function module of the at least two function modules writes processed initial data into the local shared memory unit through the local interconnection network; and a second function module of the at least two function modules acquires data from the local shared memory unit via the local interconnection network. Therefore, the function modules can access a local shared memory in parallel, so that storage bandwidths are greatly improved and delay is largely reduced, thus improving the data exchange performance among storage modules and reducing blockage and complexity of a global interconnection network, so as to solve the drawbacks that the conventional system for multiple processors to globally share memory suffers a large transmission delay, high management overhead and the like.

### BRIEF DESCRIPTION OF THE DRAWINGS

Fig. 1 is a structural diagram of a first embodiment of a conventional system for multiple processors to share memory;
Fig. 2 is a structural diagram of the second embodiment of a conventional system for multiple processors to share memory;
Fig. 3 is a flowchart illustrating implementation of a method for multiple processors to share memory according to the disclosure;
Fig. 4 is the first schematic diagram of an embodiment illustrating implementation of a method for multiple processors to share memory according to the disclosure;
Fig. 5 is the second schematic diagram of an embodiment illustrating implementation of a method for multiple processors to share memory according to the disclosure;
Fig. 6 is the third schematic diagram of an embodiment illustrating implementation of a method for multiple processors to share memory according to the disclosure;
Fig. 7 is the fourth schematic diagram of an embodiment illustrating implementation of a method for multiple processors to share memory according to the disclosure;
Fig. 8 is a structural diagram illustrating implementation of a system for multiple processors to share memory according to the disclosure;
Fig. 9 is a structural diagram of a first embodiment illustrating implementation of a system for multiple processors to share memory according to the disclosure; and
Fig. 10 is a structural diagram of a second embodiment illustrating implementation of a system for multiple processors to share memory according to the disclosure.

### DETAILED DESCRIPTION

The basic idea of the disclosure includes that: at least one local interconnection network is set, each of which is connected with at least two function modules, a local shared memory unit connected with the local interconnection network is set, and the address space of each function module is mapped to the local shared memory unit; a first function module of the at least two function modules writes processed initial data into the local shared memory unit through the local interconnection network; and a second function module of the at least two function modules acquires data from the local shared memory unit via the local interconnection network.

The disclosure will be further elaborated below by means of the drawings and specific embodiments.

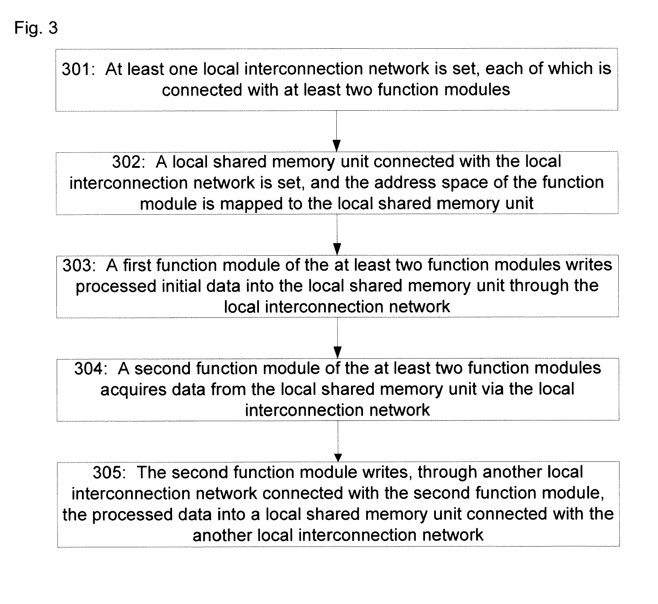

The disclosure provides a method for multiple processors to share memory. Fig. 3 is a flowchart illustrating implementation of a method for multiple processors to share memory according to the disclosure. As shown in Fig. 3, the method includes the following steps:
Step 301: At least one local interconnection network is set, each of which is connected with at least two function modules.

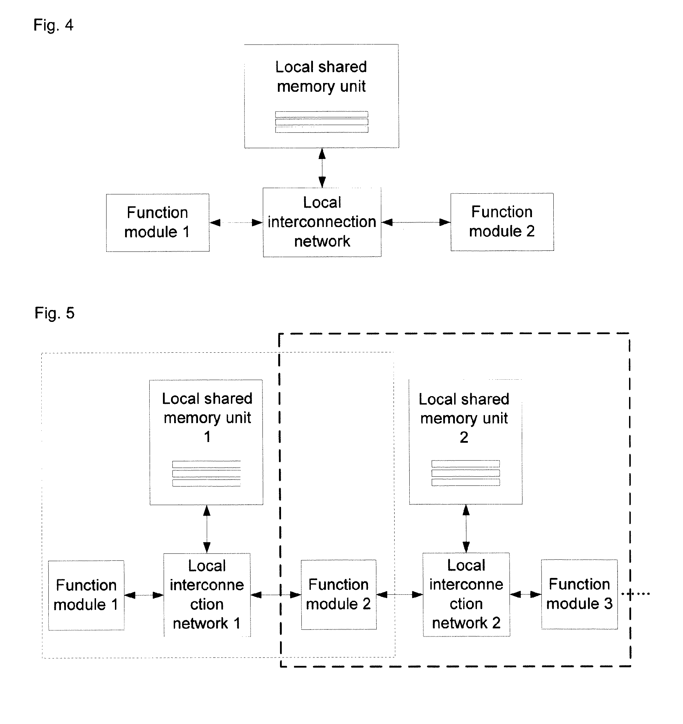

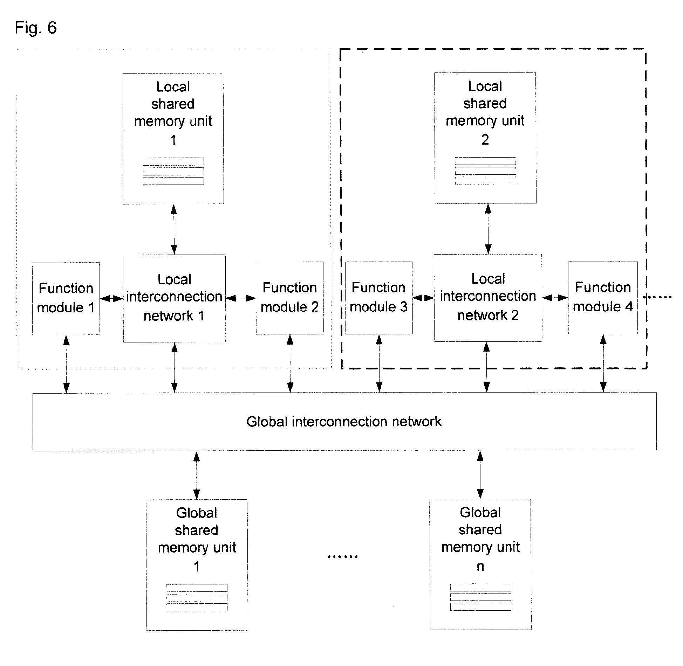

Specifically, as shown in Fig. 4, Fig. 5 and Fig. 6, in a system for multiple processors to share memory, one or more local interconnection networks are set, and each set local interconnection network may be connected with at least two function modules. As shown in Fig. 5, when there are multiple local interconnection networks, at least one function module (e.g., a second function module) of the at least two function modules may be connected with at least two local interconnection networks, that is, each function module may be connected with only one local interconnection network, or may be also connected with multiple local interconnection networks. Alternatively, as shown in Fig. 6, when there are multiple local interconnection networks and the local interconnection networks are not crossed with each other, that is, there is no common function module between the local interconnection networks, at least one function module in the at least two function modules connected with each local interconnection network is connected with a global interconnection network.

Here, the function module may be a general processor module, a configurable processor module, a wireless link processor module or the like, and the local interconnection network may be one of various topological connection networks including a shared bus, a crossbar switch and Mesh/Torus.

Step 302: A local shared memory unit connected with the local interconnection network is set, and the address space of the function module is mapped to the local shared memory unit.

Specifically, the set local interconnection networks are connected with a local shared memory unit respectively. The local shared memory unit, which is a memory unit having a memory control function, may be integrated in a chip or may be also implemented by an external memory.

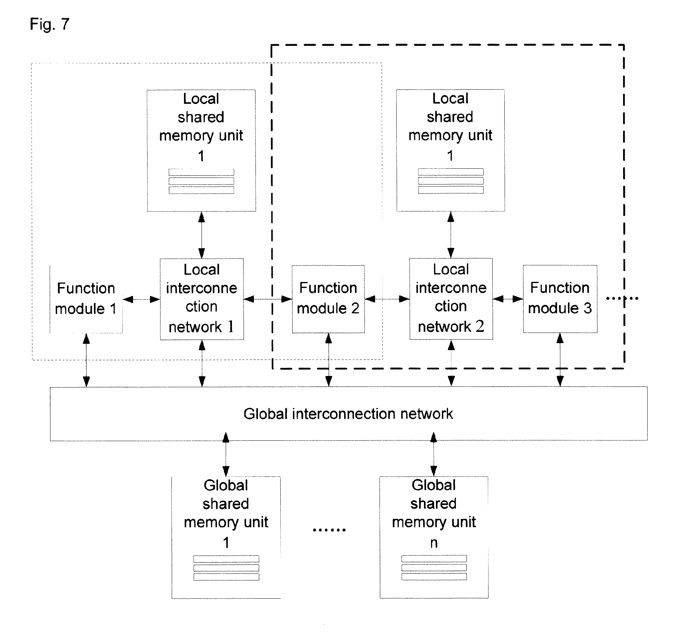

As shown in Fig. 6 and Fig. 7, the system for multiple processors to share memory of the disclosure may exist independently while implementing shared memory among function modules, or may be also connected with a global interconnection network and interact with a global shared memory unit through the global interconnection network. In order to enable the function module to read data from the local shared memory unit and write data therein, the address space of the function module needs to be mapped to the local shared memory unit. For each function module, whole address space of the function module may be mapped to the local shared memory unit; or the address space of the function module is divided into multiple areas, and then the address space consisting of the multiple areas is mapped to the local shared memory unit and the global shared memory unit respectively; or when there are multiple local interconnection networks and local shared memory units, the address space of the function module may be divided into multiple areas, and the address space consisting of these areas is mapped to different local shared memory units respectively. In this way, the local shared memory unit may be shared by multiple function modules mapped to the same shared memory unit. The local shared memory unit may exist independently, or may be also form a larger local shared memory space with other shared memory units to work jointly. Here, the dividing may be implemented by configuring a memory management unit through software programming, or may be also implemented by adding a hardware memory unit.

Step 303: A first function module of the at least two function modules writes processed initial data into the local shared memory unit through the local interconnection network.

Specifically, the first function module of the at least two function modules acquires initial data from an external interface of a chip or a global shared memory unit, processes the initial data, and writes, through a local interconnection network connected with the first function module of the at least two function modules, the processed initial data into the local shared memory unit connected with the local interconnection network. Here, different function modules acquire different initial data, for example, when the function module is a wireless link data processor module, the initial data may be voice data. The processing refers to a calculation operation performed to the initial data. Acquiring and processing of the initial data belong to the existing technology, and are not repeated here.

Step 304: A second function module of the at least two function modules acquires data from the local shared memory unit via the local interconnection network.

Specifically, the second function module of the at least two function modules acquires the data from the local shared memory unit via the local interconnection network, and processes the acquired data. The processing is the same as that of the first function module, and is not repeated here;

When there are multiple local interconnection networks and multiple local shared memory units in the system for multiple processors to share memory and there is an intersection between the multiple local interconnection networks, the method may further include that:
Step 305: The second function module writes, through another local interconnection network connected with the second function module, the processed data into a local shared memory unit connected with the another local interconnection network.

### Embodiment

Description will be provided as follows by taking two local interconnection networks, three function modules and two local shared memory units for an example. As shown in Fig. 5 and Fig. 7, a local interconnection network 1 and a local interconnection network 2 are set, a function module 1 and a function module 2 are both connected with the local interconnection network 1, and the function module 2 and a function module 3 are both connected with the local interconnection network 2.

A local shared memory unit 1 is connected with the local interconnection network 1, and a local shared memory unit 2 is connected with the local interconnection network 2. Thus, the function module 1 and the function module 2 may be connected to the local shared memory unit 1 through the local interconnection network 1, and share the local shared memory unit 1; and the function module 2 and the function module 3 may be connected to the local shared memory unit 2 through the local interconnection network 2, and share the local shared memory unit 2.

The function module 1 acquires initial data through an external interface of a chip or a global shared memory unit, and after processing the initial data, the function module 1 writes the processed initial data to the local shared memory unit 1.

The function module 2 acquires data from the local shared memory unit 1 through the local interconnection network 1, processes the acquired data, and writes, through the local interconnection network 2, the processed data to the local shared memory unit 2. The function module 3 reads the data from the local shared memory unit 2 through the local interconnection network 2, processes the read data. The rest may be done in the same manner. Thus, it can avoid access to the global shared memory unit during each read/write operation. At the same time, the function modules may access a local shared memory unit in parallel, thus greatly improving a memory bandwidth and largely reducing a delay.

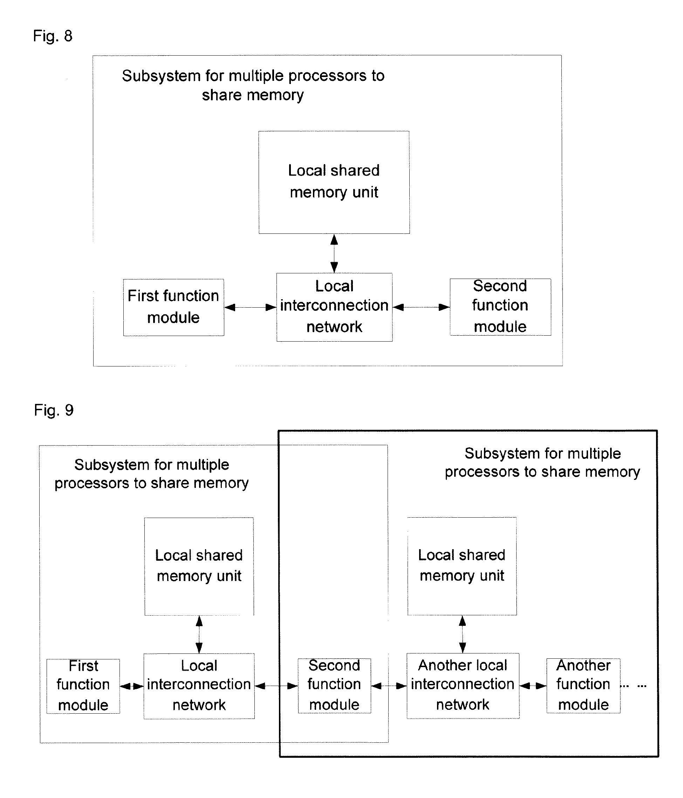

To implement the aforementioned method, the disclosure further provides a system for multiple processors to share memory. Fig. 8 is a structural diagram illustrating implementation of a system for multiple processors to share memory according to the disclosure. As shown in Fig. 8, the system includes at least one subsystem for multiple processors to share memory, and the subsystem for multiple processors to share memory includes a local interconnection network, at least two function modules connected with the local interconnection network and a local shared memory unit connected with the local interconnection network, wherein
a first function module of the at least two function modules is configured to map address space of the first function module of the at least two function modules to the local shared memory unit, and is further configured to write processed initial data into the local shared memory unit through the local interconnection network; and
a second function module of the at least two function modules is configured to map the address space of the second function module of the at least two function modules to the local shared memory unit, and is further configured to acquire data from the local shared memory unit via the local interconnection network.

Fig. 9 is a structural diagram of a first embodiment illustrating implementation of a system for multiple processors to share memory according to the disclosure. As shown in Fig. 9, based on the system for multiple processors to share memory, the system includes multiple subsystems for multiple processors to share memory, and at least one function module of the at least two function modules is connected with at least two local interconnection networks.

The second function module is further configured to process the obtained data, and write, through another local interconnection network connected with the second function module, the processed data into a local shared memory unit connected with the another local interconnection network.

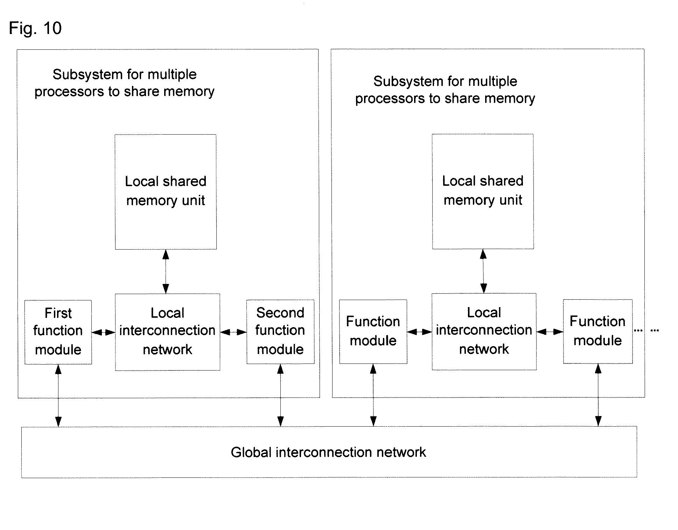

Fig. 10 is a structural diagram of a second embodiment illustrating implementation of a system for multiple processors to share memory according to the disclosure. Based on the system for multiple processors to share memory, when the system includes multiple subsystems for multiple processors to share memory and there is no common function module between the local interconnection networks in the multiple subsystems for multiple processors to share memory, the system further includes a global interconnection network. At least one function module in the at least two function modules connected with each local interconnection network is connected with the global interconnection network.

In the above system, each function module is configured to:
map whole address space of each function module to the local shared memory unit; or
divide the address space of each function module into multiple areas, and map the address space consisting of the multiple areas to the local shared memory unit and a global shared memory unit respectively; or
when there are multiple local interconnection networks and local shared memory units, divide the address space of each function module into multiple areas, and map the address space consisting of multiple areas to different local shared memory units respectively.

The above are only the preferred embodiments of the disclosure, but are not intended to limit the scope of protection of the claims of the disclosure. Any modification, equivalent replacement, improvement or the like made within the spirit and principle of the disclosure shall fall within the scope of protection of the claims of the disclosure.

## Claims

1. A method for multi processors to share memory, comprising: setting at least one local interconnection network, each of which is connected with at least two function modules; and setting a local shared memory unit connected with the local interconnection network, and mapping address space of each function module to the local shared memory unit; wherein the method further comprises:
writing, by a first function module of the at least two function modules, processed initial data into the local shared memory unit through the local interconnection network; and
acquiring, by a second function module of the at least two function modules, data from the local shared memory unit via the local interconnection network.

2. The method according to claim 1, further comprising: when there are multiple local interconnection networks, connecting at least one function module of the at least two function modules with at least two local interconnection networks.

3. The method according to claim 2, further comprising: processing, by the second function module, the acquired data, and writing, through another local interconnection network connected with the second function module, the processed data into a local shared memory unit connected with the another local interconnection network.

4. The method according to claim 1, further comprising: when there are multiple local interconnection networks, connecting at least one function module in the at least two function modules connected with each local interconnection network with a global interconnection network when there is no common function module between the local interconnection networks.

5. The method according to claim 1, **characterized in that** the step of mapping address space of each function module to the local shared memory unit comprises:
mapping whole address space of each function module to the local shared memory unit; or
dividing the address space of each function module into multiple areas, and mapping the address space consisting of the multiple areas to the local shared memory unit and a global shared memory unit respectively; or
when there are multiple local interconnection networks and local shared memory units, dividing the address space of each function module into multiple areas, and mapping the address space consisting of multiple areas to different local shared memory units respectively.

6. The method according to claim 5, **characterized in that** the step of dividing the address space of each function module into multiple areas comprises:
dividing the address space of each function module into multiple areas by configuring a memory management unit or adding a hardware memory unit.

7. The method according to claim 1, **characterized in that** the step of writing, by a first function module of the at least two function modules, processed initial data into the local shared memory unit through the local interconnection network comprises:
acquiring, by the first function module of the at least two function modules, initial data from an external interface of a chip or a global shared memory unit, processing the initial data, and writing, through a local interconnection network connected with the first function module, the processed initial data into the local shared memory unit connected with the local interconnection network.

8. A system for multiple processors to share memory, comprising at least one subsystem for multiple processors to share memory, and the subsystem for multi processors to share memory comprises a local interconnection network, at least two function modules connected with the local interconnection network, and a local shared memory unit connected with the local interconnection network, wherein
a first function module of the at least two function modules is configured to map address space of the first function module of the at least two function modules to the local shared memory unit, and is further configured to write processed initial data into the local shared memory unit through the local interconnection network; and
a second function module of the at least two function modules is configured to map the address space of the second function module of the at least two function modules to the local shared memory unit, and is further configured to acquire data from the local shared memory unit via the local interconnection network.

9. The system according to claim 8, **characterized in that** when the system comprises multiple subsystems for multiple processors to share memory, at least one function module of the at least two function modules is connected with at least two local interconnection networks.

10. The system according to claim 9, **characterized in that** the second function module is further configured to process the obtained data, and write, through another local interconnection network connected with the second function module, the processed data into a local shared memory unit connected with the another local interconnection network.

11. The system according to claim 8, **characterized in that** when the system comprises multiple subsystems for multiple processors to share memory and there is no common function module between the local interconnection networks in the multiple subsystems for multiple processors to share memory, the system further comprises a global interconnection network, wherein at least one function module in the at least two function modules connected with each local interconnection network is connected with the global interconnection network.

12. The system according to claim 8, **characterized in that** each function module is configured to:
map whole address space of each function module to the local shared memory unit; or
divide the address space of each function module into multiple areas, and map the address space consisting of the multiple areas to the local shared memory unit and a global shared memory unit respectively; or
when there are multiple local interconnection networks and local shared memory units, divide the address space of each function module into multiple areas, and map the address space consisting of multiple areas to different local shared memory units respectively.
